# FASCICULE DE BREVET EUROPEEN

(11) **EP 0 521 087 B1**
(45) Date de publication et mention de la délivrance du brevet: **15.12.1993**
(21) Numéro de dépôt: 91907058.1
(22) Date de dépôt: 20.03.1991
(51) Int. Cl.: C02F 1/04

(54) **PROCEDE DE TRAITEMENT D'UNE SOLUTION AQUEUSE CONTENANT PRINCIPALEMENT DE L'ACIDE NITRIQUE ET DE L'ACIDE FLUORHYDRIQUE**
VERFAHREN ZUR BEHANDLUNG VON EINER WÄSSERIGEN LÖSUNG, DIE INSBESONDERE SALPETERSÄURE UND FLUSSSÄURE ENTHÄLT
PROCESS FOR THE TREATMENT OF AN AQUEOUS SOLUTION CONTAINING MAINLY NITRIC AND HYDROFLUORIC ACIDS

(30) Priorité: 21.03.1990 FR 9003639
(43) Date de publication de la demande: 07.01.1993
(73) Titulaire: COGEMA COMPAGNIE GENERALE DES MATIERES NUCLEAIRES, F-78141 Velizy-Villacoublay (FR)
(72) Inventeur: LUCAS, Philippe, F-75014 Paris (FR); MOULIN, Jean-Paul, F-78390 Bois-d'Arcy (FR); HALNA DU FRETRAY, Olivier, F-30130 Pont-Saint-Esprit (FR); ROUSSEL, Joseph, F-84190 Beaumes-de-Venise (FR); PETIT, Jany, F-78180 Montigny-le-Bretonneux (FR); SAINTOUIL, Claude, F-26790 Suze-la-Rousse (FR); TOUSSAINT, Claude, F-84100 Orange (FR)
(74) Mandataire: Des Termes, Monique
(86) Numéro de dépôt international: FR9100226
(87) Numéro de publication internationale: WO9114655

(56) Documents cités:
- FR-A- 2 303 761
- Patent Abstracts of Japan, vol. 2, no. 71, (M-78), 30 May, 1978

## Description

La présente invention a pour objet un procédé de traitement d'une solution aqueuse contenant principalement de l'acide nitrique et de l'acide fluorhydrique.

De telles solutions peuvent notamment consister en des effluents industriels tels que des bains de décapage métalliques, ou être produites dans les opérations du cycle des combustibles nucléaires.

On propose, selon l'invention, un procédé de traitement de ces solutions qui permet de récupérer, d'une part, les deux acides séparés, qui peuvent ainsi être recyclés et, d'autre part, une eau purifiée vis-à-vis desdits deux acides. Une telle eau, si elle ne contient pas d'autre(s) substance(s) contaminante(s) peut être rejetée dans l'environnement.

Le traitement de solutions aqueuses contenant de l'acide nitrique et de l'acide fluorhydrique par distillation est rendu difficile par les propriétés de l'équilibre liquide-vapeur du mélange des deux acides.

On observe par ailleurs que les données d'équilibre liquide-vapeur sur ce système ne concernent que les mélanges contenant des traces d'acide fluorhydrique ou, au plus, des solutions 4M en acide fluorhydrique. On ne trouve pas de données, dans la littérature, sur des mélanges concentrés en acide fluorhydrique.

Dans le brevet US-A-3,846,256, on décrit un procédé de purification de l'acide nitrique par élimination des ions fluorures qu'il contient. Ledit procédé repose sur l'utilisation d'ions de métaux tels que le zirconium et l'aluminium. La volatilité de l'acide fluorhydrique est ainsi abaissée par formation de complexes de l'ion fluorure des métaux concernés et la séparation d'un mélange d'acide nitrique et d'eau par évaporation est alors possible. Ce procédé permet donc de purifier l'acide nitrique, mais il présente deux inconvénients : d'une part, il conduit à l'obtention d'un effluent chargé en sels, d'autre part, il ne permet pas la séparation et donc la valorisation de l'acide fluorhydrique.

On a également proposé d'introduire de la silice pour, au contraire, augmenter la volatilité de l'acide fluorhydrique par formation d'acide fluosilicique. Selon cette méthode, l'acide fluorhydrique est également pollué et donc non valorisable. Ladite méthode est d'ailleurs surtout mise en oeuvre dans des opérations discontinues, essentiellement à des fins analytiques.

Selon l'invention, on a considéré le problème sous un angle nouveau et on s'est proposé de travailler en milieu concentré en les deux acides.

On peut alors, par une opération de distillation, séparer d'une solution aqueuse lesdits deux acides.

Le procédé de l'invention se caractérise donc en ce qu'il inclut une opération de distillation d'une solution aqueuse concentrée en lesdits deux acides, pour les séparer.

Il apparaît en effet que la volatilité relative de l'acide fluorhydrique par rapport à l'acide nitrique est d'autant plus grande en milieu nitrique et fluorhydrique que la teneur en eau est plus faible. En particulier, au voisinage de l'azéotrope eau-acide nitrique, de l'azéotrope eau-acide fluorhydrique et de leurs mélanges, cette volatilité relative est supérieure à l'unité.

Selon l'invention, on propose donc de distiller une solution aqueuse concentrée en les acides nitrique et fluorhydrique. Le résidu de distillation obtenu est épuré en acide fluorhydrique, tandis que le distillat est fortement enrichi en ledit acide flurohydrique.

Plus le concentrat à distiller est concentré en acides, plus les deux acides obtenus séparément ont une teneur en eau faible.

Le procédé de l'invention est mis en oeuvre avec une solution aqueuse concentrée en lesdits deux acides, dont la composition est voisine de celle d'un mélange des deux azéotropes eau-acide nitrique, eau-acide fluorhydrique.

La solution aqueuse concentrée --à distiller selon l'invention-- consiste en la solution aqueuse à traiter ou, plus généralement, est obtenue à partir de celle-ci.

Préalablement à l'opération de distillation selon l'invention, la solution à traiter doit donc généralement subir une concentration en les deux acides. Cette concentration peut résulter de la mise en oeuvre de tout procédé connu.

La solution concentrée en lesdits deux acides -à distiller selon l'invention- peut notamment être obtenue en soumettant la solution aqueuse à traiter à une opération de distillation préalable.

Visant à obtenir, à l'issue de cette première opération de distillation, une solution la plus concentrée possible en les deux acides --pour une séparation optimale desdits deux acides, au cours de la seconde opération de distillation--, on optimise les paramètres de ladite première opération de distillation. Il convient d'éliminer, au cours de celle-ci, la majeure partie de l'eau contenue dans la solution aqueuse à traiter. On vise ainsi l'obtention d'un concentrat d'une composition voisine de celle d'un mélange des deux azéotropes eau-acide nitrique, eau-acide fluorhydrique.

Selon une variante préférée de l'invention, les deux opérations de distillation sont effectuées en série dans une même installation.

Les deux opérations de distillation successives peuvent conduire à l'obtention des trois produits :
- une eau résiduelle purifiée (vis-à-vis des deux acides) et pouvant éventuellement être réjetée dans l'environnement (cette eau résiduelle constitue le distillat de la première opération de distillation, le résidu de distillation ayant une composition voisine de celle d'un mélange des deux azéotropes eau-acide nitrique, eau-acide fluorhydrique) ;
- une solution aqueuse d'acide nitrique à une concentration proche de l'azéotrope eau-acide nitrique (plus de 55 % en masse d'acide nitrique) et purifiée vis-à-vis de l'acide fluorhydrique (cette solution constitue le résidu de la seconde opération de distillation) ;
- une solution aqueuse d'acide fluorhydrique à une concentration proche de l'azéotrope eau-acide fluorhydrique (plus de 25 % en mole d'acide fluorhydrique) et contenant moins de 5 % en mole d'acide nitrique (cette solution constitue le distillat de la seconde opération de distillation).

On saisit ici tout l'intérêt du procédé de l'invention qui permet à la fois la purification de la solution initiale et la séparation des deux acides.

Les paramètres de l'(ou des) opération(s) de distillation-pression, nombre de plateaux, taux de reflux, taux de rebouillage, température(s) au(x) bouilleur(s)...- sont calculés, sans difficulté particulière, par l'homme de métier, en fonction de la qualité de la séparation souhaitée. Il en est de même pour ceux d'une étape préalable de concentration des effluents, autre qu'une opération de distillation.

La pression dans l'installation où le procédé de l'invention est mis en oeuvre est choisie en fonction des matériaux utilisés, de façon à travailler à des températures compatibles avec la résistance mécanique et la résistance à la corrosion desdits matériaux.

Le procédé de l'invention est avantageusement mis en oeuvre sous pression réduite.

Le matériau de construction doit donc résister, dans les conditions opératoires choisies, mécaniquement et chimiquement.

En particulier, des phénomènes de corrosion ne doivent pas entraîner la présence dans la solution d'ions métalliques susceptibles de complexer des fluorures ou de réduire la volatilité de l'acide fluorhydrique.

Le procédé de l'invention est toutefois bien adapté pour le traitement de solutions contenant des ions métalliques ayant un effet de complexation limité vis-à-vis des ions fluorures. Dans ce cas, ces impuretés se retrouvent intégralement dans la solution d'acide nitrique purifiée vis-à-vis de l'acide fluorhydrique.

Ledit matériau de construction sera avantageusement choisi parmi les métaux nobles (tel le platine...) et les polymères à haute résistance mécanique, chimique et thermique comme le difluoropolyvinyl. Ce dernier matériau, qui présente la résistance mécanique la plus élevée au-dessus de 100°C est particulièrement préféré.

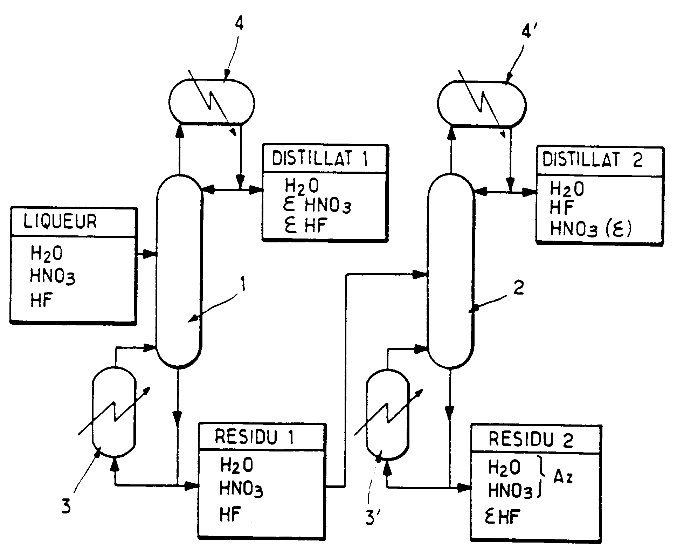

La variante préférée de l'invention va maintenant être décrite en référence à l'unique figure annexée, sur laquelle on a schématisé un dispositif de mise en oeuvre du procédé.

Ledit dispositif se compose de deux colonnes (1) (2) de distillation. Il fonctionne en continu.

Dans la première colonne (1), on élimine la majeure partie de l'eau contenue dans la liqueur d'alimentation. La température dans le bouilleur (3) est la température d'ébullition du concentrat 1 à la pression considérée. On a représenté en (4) un condenseur. Le distillat 1 est fortement épuré en acide nitrique et en acide fluorhydrique. Il peut être rejeté dans l'environnement. Le résidu de cette première colonne constitue le concentrat 1 et a une composition voisine de celle d'un mélange des azéotropes eau-acide nitrique et eau-acide fluorhydrique.

Ledit concentrat 1 est traité dans la seconde colonne de distillation (2). On a représenté en (3') son bouilleur et en (4') son condenseur. Cette colonne permet la récupération, en tête, de l'azéotrope eau-acide fluorhydrique. Le résidu 2 est épuré en acide fluorhydrique. Sa composition est proche de celle de l'azéotrope eau-acide nitrique. Le distillat 2 contient un mélange d'eau, d'acide fluorhydrique et d'acide nitrique. Sa fraction molaire en acide fluorhydrique est généralement supérieure à 0,25, celle en acide nitrique inférieure à 0,05.

L'exemple ci-après illustre le procédé de l'invention.

On se propose de mettre en oeuvre ledit procédé sur un effluent -solution aqueuse- contenant en fraction massique 12,7 % d'acide nitrique et 0,3 % d'acide fluorhydrique pour obtenir d'une part une eau résiduelle contenant moins de 100 mg/l d'acide fluorhydrique et moins de 3 g/l d'acide nitrique et, d'autre part, de l'acide nitrique contenant moins de 10 mg/l d'acide fluorhydrique.

Les résultats ci-dessus sont obtenus, dans les conditions opératoires ci-après.

L'effluent est traité dans une installation comprenant deux colonnes de distillation en série :
- la première colonne est composée d'une dizaine de plateaux théoriques, l'alimentation étant localisée sur le deuxième plateau, les plateaux étant comptés à partir de la tête de colonne ; en tête, le taux de reflux est de l'ordre de 0.6 ;
- la deuxième colonne est composée d'une vingtaine de plateaux théoriques, l'alimentation étant localisée sur le troisième plateau ; en tête, le taux de reflux est de l'ordre de 17 ;
- les équipements sont réalisés en difluoropolyvinyl (PVDF) ;
- les opérations sont effectuées sous pression réduite (50 mm Hg) ;
- dans ces conditions, les valeurs extrêmes de température sont environ, de 38°C et 60°C dans la première colonne, de 50°C et 60°C dans la seconde.

## Revendications

1. Procédé de traitement d'une solution aqueuse contenant principalement de l'acide nitrique et de l'acide fluorhydrique ayant une composition voisine de celle d'un mélange des deux azéotropes eau-acide nitrique et eau-acide fluorhydrique, caractérisé en ce qu'il consiste à distiller la solution aqueuse concentrée pour obtenir à partir de celle-ci un distillat riche en acide fluorhydrique et un résidu de distillation riche en acide nitrique.

2. Procédé de traitement d'une solution aqueuse contenant principalement de l'acide nitrique et de l'acide fluorhydrique et ayant des concentrations en acide nitrique, en acide fluorhydrique et en eau telles que l'on puisse la concentrer par distillation en éliminant principalement de l'eau, caractérisé en ce qu'il comprend les étapes suivantes :
a) soumettre la solution aqueuse à traiter à une concentration pour obtenir à partir de celle-ci une solution aqueuse concentrée ayant une composition voisine de celle d'un mélange des deux azéotropes eau-acide nitrique et eau-acide fluorhydrique, et
b) distiller la solution aqueuse concentrée pour obtenir à partir de celle-ci un distillat riche en acide fluorhydrique et un résidu de distillation riche en acide nitrique.

3. Procédé selon la revendication 2, caractérisé en ce que dans l'étape a), on concentre la solution aqueuse à traiter par distillation d'eau.

4. Procédé selon la revendication 3, caractérisé en ce que les deux opérations de distillation sont réalisées en série dans une même installation.

5. Procédé selon l'une quelconque des revendications 1 à 4, caractérisé en ce que la (les) opérations de distillation sont effectuées sous pression réduite.

6. Procédé selon l'une quelconque des revendications 1 à 5, caractérisé en ce qu'il est mis en oeuvre dans une installation en matériau choisi parmi les métaux nobles et les polymères à haute résistance.

7. Procédé selon la revendication 6, caractérisé en ce que le matériau est du difluoropolyvinyl.

## Patentansprüche

1. Verfahren zur Behandlung einer wässrigen Lösung, die insbesondere Salpetersäure und Flußsäure enthält, eine Zusammensetzung aufweisend, ähnlich der einer Mischung der beiden Azeotrope Wasser-Salpetersäure und Wasser-Flußsäure,
dadurch **gekennzeichnet**,
daß es darin besteht, die konzentrierte wässrige Lösung zu destillieren, um aus dieser ein flußsäurereiches Destillat zu erhalten und einen salpeterreichen Destillationsrückstand.

2. Behandlungsverfahren einer wässrigen Lösung, hauptsächlich Salpetersäure und Flußsäure enthaltend und Salpetersäure-, Flußsäure- und Wasserkonzentrationen aufweisend, so daß man sie durch Destillierung konzentrieren kann, indem man vor allem das Wasser eliminiert, dadurch gekennzeichnet, daß es folgende Schritte umfaßt:
a) Konzentrieren der wässrigen Lösung, um von ihr eine konzentrierte wässrige Lösung zu erhalten, mit einer Zusammensetzung nahe der einer Mischung der beiden Azeotrope Wasser-Salpetersäure und Wasser-Flußsäure, und
b) Destillieren der konzentrierten wässrigen Lösung, um von ihr ein flußsäurereiches Destillat und einen salpetersäurereichen Destillationsrückstand zu erhalten.

3. Verfahren nach Anspruch 2, dadurch gekennzeichnet, daß man in Schritt a) die zu behandelnde wässrige Lösung durch Wasserdestillation konzentriert.

4. Verfahren nach Anspruch 3, dadurch gekennzeichnet, daß die beiden Destillationsoperationen nacheinander ausgeführt werden in derselben Anlage.

5. Verfahren nach einem der Ansprüche 1 bis 4, dadurch gekennzeichnet, daß eine (oder beide) Destillationsoperationen unter vermindertem Druck durchgeführt werden.

6. Verfahren nach einem der Ansprüche 1 bis 5, dadurch gekennzeichnet, daß es durchgeführt wird in einer Anlage aus einem Material, ausgewählt unter den Edelmetallen und den hochresistenten Polymeren.

7. Verfahren nach Anspruch 6, dadurch gekennzeichnet, daß das Material Difluorpolyvinyl ist.

## Claims

1. Process for the treatment of an aqueous solution mainly containing nitric acid and hydrofluoric acid having a composition close to that of a mixture of two water-nitric acid and water-hydrofluoric acid azeotropes, characterized in that it consists of distilling the concentrated aqueous solution in order to obtain therefrom a distillate rich in hydrofluoric acid and a distillation residue rich in nitric acid.

2. Process for the treatment of an aqueous solution mainly containing nitric acid and hydrofluoric acid and having nitric acid, hydrofluoric acid and water concentrations such that it is possible to concentrate the same by distillation mainly eliminating the water, characterized in that it comprises the following stages:
a) subjecting the aqueous solution to be treated to a concentration in order to obtain therefrom a concentrated aqueous solution having a composition close to that of a mixture of two water-nitric acid and water-hydrofluoric acid azeotropes and
b) distilling the concentrated aqueous solution in order to obtain therefrom a distillate rich in hydrofluoric acid and a distillation residue rich in nitric acid.

3. Process according to claim 2, characterized in that in stage a) the aqueous solution to be treated is concentrated by the distillation of water.

4. Process according to claim 3, characterized in that the two distillation operations are performed in series in the same installation.

5. Process according to any one of the claims 1 to 4, characterized in that the distillation operation or operations are performed under reduced pressure.

6. Process according to any one of the claims 1 to 5, characterized in that it is performed in an installation made from a material chosen from among noble metals and high strength polymers.

7. Process according to claim 6, characterized in that the material is polyvinyl difluoride.
